# EUROPEAN PATENT APPLICATION

(11) **EP 4 741 352 A1**
(43) Date of publication of application: **13.05.2026**
(21) Application number: 24398026.5
(22) Date of filing: 07.11.2024
(51) Int. Cl.: C02F 9/00, C02F 1/52, C02F 1/56, C02F 1/66, C02F 1/72, C02F 1/00, C02F 101/10, C02F 101/20, C02F 101/30, C02F 1/44, C02F 1/54, C02F 1/76

(54) **PROCESS OF PREPARING A CONTAMINATED WATER SAMPLE AND SUBSEQUENT TREATMENT OF THIS CONTAMINATED WATER, AND USE OF A KIT**

(71) Applicant: Ark - Indústria, Lda, 4430-059 Vila Nova de Gaia (PT)
(72) Inventor: AIRES PEREIRA COSTA, Nelson, 4430-059 Vila Nova de Gaia (PT)
(74) Representative: do Nascimento Gomes, Rui

(57) **Abstract**

The present disclosure falls within the technical scope of chemical samples obtained synthetically, the present disclosure having the purpose of preparing contaminated waters, more particularly, substances prepared together and suitable for the contamination of a volume of water, with a view to its subsequent treatment in a miniaturised water treatment system. This disclosure includes obtaining and treating synthetically contaminated waters, using different chemical reagents in order to control the preparation of contaminated waters that resemble contaminated natural or waste water in a real context and which may be treated by chemical and mechanical processes, for example in miniaturised treatment plants. The present disclosure comprises a process for preparing a contaminated water sample and subsequently treating said contaminated water. It also includes the use of a kit to prepare a sample of contaminated water for subsequent treatment.

## Description

### SCOPE OF THE DISCLOSURE

The present disclosure falls within the technical scope of chemical samples obtained synthetically, the present disclosure having the purpose of preparing contaminated water, in particular substances that are prepared together and suitable for the contamination of a volume of water, with a view to its subsequent treatment in a miniaturised water treatment system.

### STATE OF THE ART

A water treatment plant (WTP) is an installation designed to purify contaminated water, making it suitable for human consumption or other uses, such as in industrial processes. The size of a water treatment plant (WTP) can vary significantly depending on the treatment capacity and the needs of the area served, but they are in general large-scale facilities. A typical WTP can occupy several tens of thousands of square metres, with different areas dedicated to each stage of the treatment process. A WTP includes different water treatment processes, including collecting raw water from natural sources such as rivers or water reservoirs, which then goes through stages such as coagulation-flocculation, wherein suspended particles aggregate and are removed; decantation, in order to separate solids that are susceptible of sedimentation; filtration, wherein the water passes through layers of sand, anthracite or activated carbon to remove smaller particles; and disinfection, usually with chlorine or ozone, so as to eliminate microorganisms. After this treatment, the treated water may be stored and distributed for public supply.

By contrast, a waste water treatment plant (WWTP) is a facility designed to remove contaminants from waste water, ensuring that the treated effluent may be returned to the environment or reused. The size of a WWTP varies according to the treatment capacity and the needs of the community served, but, much like WTPs, they are generally large and complex. A typical WWTP can occupy extensive areas, including different sectors dedicated to each stage of waste water treatment. The treatment process involves several key stages, such as collecting the waste water, removing large solids through grating and desanders, chemically and biologically treating the water, filtering and disinfecting the water. Finally, after being treated, the water may be released into water bodies, meeting the applicable environmental standards, or reused for irrigation, industrial processes and other purposes.

Although the technology for these treatment plants is widely known and developed, there are no small WTPs or WWTPs - occupying a portion of a room, for example treating quantities of up to around 50 litres of water - that have adequate functional and laboratory performance.

The state of the art includes solutions that seek to simulate the operation of water treatment plants for learning purposes.

These solutions simulate the operation of plants by including elements that are intended, for instance, to represent contaminants, but which are not contaminants, consisting only of fictitious elements - such as small plastic spheres - with which they try to demonstrate and simulate how treatment plants work in general in a basic learning context.

These systems are not functional and do not make it possible to effectively treat the water, at least no more than removing those fictitious elements from the water or, by other means, showing how a water treatment plant would work. These plants do not allow for laboratory developments, research and development in the segmented reuse of sludge.

Therefore, they never come into contact with water that is actually contaminated, at least no more than for the simple filtration of water containing the aforementioned fictitious elements, such as small plastic spheres of approximately 5 mm diameter.

Consequently, there are also no known solutions for preparing contaminated water that, in a laboratory or training environment, would make it possible to prepare a quantity of contaminated water to be treated in these functional miniaturised plants.

The solutions of the present disclosure allow for the preparation of contaminated water based on synthetic samples. Those contaminated waters may be treated in miniaturised, functional water treatment plants which, in turn, make it possible to efficiently treat, test and control new models for treating contaminated waters in an innovative manner, in an environment of scientific development, research, learning and reuse solutions.

### SUMMARY OF THE DISCLOSURE

The present disclosure includes a process for preparing a contaminated water sample and subsequently treating said contaminated water. The process comprises
filling a tank with a volume of 4 to 50 L of demineralised water,
mixing a first mass of at least one soluble contaminant into the volume of demineralised water, the first mass ranging from 1 mg to 1 g per litre of demineralised water, thus obtaining contaminated water,
mixing a second mass of a reagent that is capable of reacting with the contaminant in water, the reaction of the reagent with the contaminant being one of oxidation, coagulation-flocculation or precipitation, and the second mass being such that i) the reagent reacts with the entire contaminant by oxidation, coagulation-flocculation or chemical precipitation, resulting in a product whose deposition occurs by gravity, and ii) ranges from 0.003 mg to 4.5 g per litre of demineralised water.

The process may additionally comprise
arranging the first mass of at least one soluble contaminant and the volume of demineralised water in a tank,
activating rotating mixing means arranged inside the tank for a predefined first period of time,
arranging the second mass of a reagent that is capable of reacting with the contaminant in the water in the tank,
activating the rotating mixing means arranged inside the tank for a second predefined period of time,
waiting for the product of the reaction between the contaminant and the reagent to sediment in the tank, under the action of gravity, for a predefined period of time.

The predefined sedimentation period may correspond to the time in which, for a contaminant in a first mass and a reagent in a second mass, the reaction between the two is complete and results in the sedimentation of the product.

The activation of the rotating mixing means during a first predefined period of time and/or the activation of the rotating mixing means during a second predefined period of time may include
rapid stirring rotation of between 100 and 250 rpm,
moderate stirring rotation of between 30 and 99 rpm,
   and/or
slow stirring rotation of between 10 and 29 rpm.

The contaminant may consist of a metal, non-metal, silicate and/or organic matter.

The reagent may be such that it reacts with the metal, non-metal, silicate and/or organic matter contaminant by oxidation, chemical precipitation or coagulation-flocculation.

Additionally,
the contaminant may consist of an iron compound or a manganese compound, the corresponding reagent reacting with the contaminant by oxidation,
the contaminant may consist of a phosphorus compound, a copper compound, a zinc compound, the corresponding reagent reacting with the contaminant by chemical precipitation, or
the contaminant may consist of a natural dye, the corresponding reagent reacting with the contaminant by coagulation-flocculation.

In addition,
- the contaminant may be an iron compound, optionally iron (II) sulphate, and the first mass may be between 10 and 1000 mg per litre of demineralised water, and the corresponding reagent may consist of
   H₂O₂ between 3 and 600 mg per litre of demineralised water
   KMnO₄ between 9 and 1000 mg per litre of demineralised water, or
   Chlorine or its derivatives between 6 and 2000 mg per litre of demineralised water,
- the contaminant may be a manganese compound, optionally manganese (II) sulphate, and the first mass may be between 1 and 1000 mg per litre of demineralised water, and the corresponding reagent may consist of
   H₂O₂ between 0.3 and 600 mg per litre of demineralised water
   O₂ between 2 and 1000 mg per litre of demineralised water, or
   Chlorine or its derivatives between 1 and 4500 mg per litre of demineralised water,
- the contaminant may be a phosphorus compound, optionally potassium dihydrogen phosphate, and the first mass may be between 10 and 1000 mg per litre of demineralised water, and the corresponding reagent may consist of
   a calcium compound between 20 and 2000 mg per litre of demineralised water
   an aluminium compound between 10 and 1300 mg per litre of demineralised water, or
   an iron compound between 20 and 2000 mg per litre of demineralised water,
- the contaminant may be a copper compound, optionally copper (II) sulphate, and the first mass may be between 5 and 1000 mg per litre of demineralised water, and the corresponding reagent may consist of
   an alkaline substance with a mass such that, when mixed with the copper compound in the water, raises the total pH to between 7 and 13, where the alkaline substance optionally consists of sodium hydroxide or calcium hydroxide,
- the contaminant may be a zinc compound, optionally zinc (II) sulphate, and the first mass may be between 10 and 1000 mg per litre of demineralised water, and the corresponding reagent may consist of
   an alkaline substance with a mass such that, when mixed with the zinc compound in the water, raises the total pH to between 7 and 13, where the alkaline substance optionally consists of sodium hydroxide or calcium hydroxide, or
- the contaminant may be a natural dye, and the first mass may be between 10 and 1000 mg per litre of demineralised water, and the corresponding reagent may consist of
   a calcium compound between 0.003 and 0.3 mg per litre of demineralised water
   an aluminium compound between 0.4 and 50 mg per litre of demineralised water, or
   an iron compound between 2 and 200 mg per litre of demineralised water.

The present disclosure further comprises a sludge resulting from the sedimentation of the reaction product of the process which is the object of the present disclosure.

The present disclosure further comprises the use of a kit in the preparation of a contaminated water sample for further treatment, the kit comprising
a first mass of at least one soluble contaminant, the first mass being between 1 mg and 1 g per litre of demineralised water,
   and
a second mass of a reagent capable of reacting with the entire contaminant in the water, the reaction of the reagent with the contaminant being one of oxidation, coagulation-flocculation or chemical precipitation, and the second mass being between 0.3 and 4500 mg per litre of demineralised water,
   wherein the use of the kit includes preparing a sample of contaminated water by
mixing a volume of 4 to 50 L of demineralised water with the first mass of a soluble contaminant in the volume of demineralised water,
   and treating the contaminated water sample by
mixing a corresponding second mass of a reagent that reacts with the contaminant in demineralised water, the reaction of the reagent with the contaminant being one of oxidation, coagulation-flocculation or chemical precipitation.

According to the use of the present disclosure, each contaminant may be arranged in a container adjustable to the first mass and each reagent may be arranged in a container adjustable to the second mass, optionally the container adjustable to the first mass being a single-dose volume container suitable for the first mass and the container adjustable to the second mass being a single-dose volume container suitable for the second mass.

The use of the kit can include preparation of a contaminated water sample by
mixing a volume of 4 to 50 L of demineralised water with the first mass of a soluble contaminant in the volume of demineralised water by mixing the whole of the first mass contained in the container with the demineralised water,
   and the treatment of the contaminated water sample by
mixing a corresponding second mass of a reagent that reacts with the contaminant in demineralised water, reacting in its entirety with the first mass in the container with the contaminated water.

According to the use of the present disclosure, the contaminant may consist of a metal, non-metal, silicate and/or organic matter optionally the reagent being such that it reacts with the metal, non-metal, silicate and/or organic matter contaminant by oxidation, chemical precipitation or coagulation-flocculation.

Additionally,
the contaminant may consist of an iron compound or a manganese compound, the corresponding reagent reacting with the contaminant by oxidation,
the contaminant may consist of a phosphorus compound, a copper compound, a zinc compound, the corresponding reagent reacting with the contaminant by chemical precipitation, or
the contaminant may consist of a natural dye, the corresponding reagent reacting with the contaminant by coagulation-flocculation.

According to the use of the present disclosure,
the contaminant may be an iron compound, optionally iron (II) sulphate, and the first mass may be between 10 and 1000 mg per litre of demineralised water, and the corresponding reagent may consist of
   H₂O₂ between 3 and 600 mg per litre of demineralised water KMnO₄ between 9 and 1000 mg per litre of demineralised water, or Chlorine or its derivatives between 6 and 2000 mg per litre of demineralised water,
the contaminant may be a manganese compound, optionally manganese (II) sulphate, and the first mass may be between 1 and 1000 mg per litre of demineralised water, and the corresponding reagent may consist of
   H₂O₂ between 0.3 and 600 mg per litre of demineralised water
   O₂ between 2 mg and 1000 mg per litre of demineralised water, or
   Chlorine or its derivatives between 1 and 4500 mg per litre of demineralised water,
the contaminant may be a phosphorus compound, optionally potassium dihydrogen phosphate, and the first mass may be between 10 and 1000 mg per litre of demineralised water, and the corresponding reagent may consist of
   a calcium compound between 20 and 2000 mg per litre of demineralised water
   an aluminium compound between 10 and 1300 mg per litre of demineralised water, or
   an iron compound between 20 and 2000 mg per litre of demineralised water,
the contaminant may be a copper compound, optionally copper (II) sulphate, and the first mass may be between 5 and 1000 mg per litre of demineralised water, and the corresponding reagent may consist of
   an alkaline substance with a mass such that, when mixed with the copper compound in the water, raises the total pH to between 7 and 13, where the alkaline substance optionally consists of sodium hydroxide or calcium hydroxide, the contaminant is a zinc compound, optionally zinc (II) sulphate, and the first mass is between 10 and 1000 mg per litre of demineralised water, and the corresponding reagent consists of
   an alkaline substance with a mass such that, when mixed with the zinc compound in the water, raises the total pH to between 7 and 13, where the alkaline substance optionally consists of sodium hydroxide or calcium hydroxide, the contaminant is a natural dye, and the first mass is between 10 and 1000 mg per litre of demineralised water, and the corresponding reagent consists of
   a calcium compound between 0.003 and 0.3 mg per litre of demineralised water
   an aluminium compound between 0.4 and 50 mg per litre of demineralised water, or
   an iron compound between 2 and 200 mg per litre of demineralised water.

The present disclosure further includes a kit for preparing a sample of contaminated water for subsequent treatment, the kit comprising
a volume of 4 to 50 L of demineralised water,
a first mass of at least one soluble contaminant, the first mass being between 1 mg and 1 g per litre of demineralised water,
and a second mass of a reagent that is capable of reacting with the entire contaminant in the water, the reaction of the reagent with the contaminant being one of oxidation, coagulation-flocculation or chemical precipitation, and the second mass being between 0.3 and 4500 mg per litre of demineralised water.

According to the kit of this disclosure, each contaminant may be arranged in a container adjustable to the first mass and each reagent is arranged in a container adjustable to the second mass, optionally the container adjustable to the first mass being a single-dose volume container suitable for the first mass and the container adjustable to the second mass being a single-dose volume container suitable for the second mass.

### DESCRIPTION OF THE FIGURES

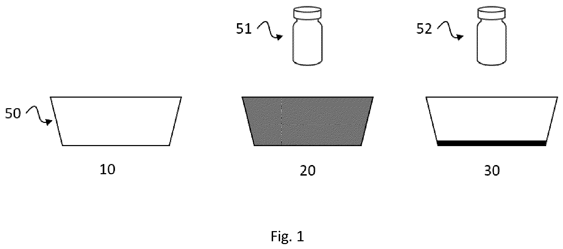

Figure 1 - representation of the method of the present disclosure. Demineralised water (50) is provided in a tank (10) and, subsequently, a soluble contaminant (51) is mixed with the demineralised water (20). A reagent (52) capable of reacting with the contaminant (51) in water by chemical oxidation, coagulation-flocculation or chemical precipitation is then mixed (30), creating a precipitate that sediments.

### DETAILED DESCRIPTION

The present disclosure includes obtaining and treating synthetically contaminated water by using different chemical reagents, in order to control the preparation of contaminated water that resembles a contaminated natural or waste water in a real context, and which may be treated by chemical and mechanical processes, for example in miniaturised water treatment plants.

The present disclosure comprises a process for preparing a contaminated water sample and then treating said contaminated water.

It also comprises the use of a kit in the preparation of a contaminated water sample for subsequent treatment.

For the preparation of contaminated water, a volume of 4 to 50 L of demineralised water is placed in a tank. The use of demineralised water allows the reaction of the treatment to be carried out to be known, and thus controllable, since the amount of contaminant to be added is known, consisting exclusively of the soluble contaminant to be added. The use of non-demineralised water would result in the need for prior phases in order to measure the chemical parameters of the non-demineralised water, which are therefore not required. Furthermore, since the process of the present disclosure is for training purposes, i.e. the water is contaminated for subsequent treatment, it is important to know which contaminant and in which quantity. This knowledge makes it possible to use single-dose containers with the amount of contaminant and the corresponding amount of reagent to be used.

The volume of demineralised water may be between 5 and 10 L, optionally from 5 to 7 L.

The first mass of at least one soluble contaminant is thus mixed into the volume of demineralised water, the first mass being between 1 mg and 1 g per litre of demineralised water, so as to obtain the contaminated water.

The contaminant may consist of a metal (e.g. manganese), non-metal (e.g. phosphorus), silicate (e.g. diatomaceous earth) and/or organic matter (e.g. tannic acid).

Some initial parameters of the mixture of the contaminant with demineralised water may be quantified before treatment begins, such as pH, conductivity, colour, turbidity and the analytical amount of the contaminants added to the water.

Considering the scientific, research and learning applications of the present disclosure, the contaminated water is then treated, by means of a reaction with a reagent corresponding to the contaminant. A second mass of a reagent that is capable of reacting with the contaminant in water is thus mixed, the reaction of the reagent with the contaminant being one of oxidation, coagulation-flocculation or chemical precipitation, and the second mass being such that
i) the reagent reacts with the entire contaminant by oxidation, coagulation-flocculation or chemical precipitation, resulting in a product whose deposition occurs by gravity, and
ii) is between 0.003 mg and 4.5 g per litre of demineralised water.

The reaction of the reagent with the entire contaminant by oxidation, chemical precipitation or coagulation-flocculation is such that, substantially, the whole mass of contaminant present in the water reacts with, substantially, the whole mass of reagent added, thus making it a complete reaction. Both the contaminant and the reagent are consumed in the reaction.

The contaminant can react with one or more reagents by oxidation, chemical precipitation or coagulation-flocculation. For all the contaminant present in the water to be consumed in a complete reaction - treating the water for this contaminant - one reagent, two reagents or more than two reagents may be added.

The reaction of the reagent with the contaminant within the scope of this disclosure may, as previously mentioned, be a chemical oxidation, a chemical precipitation or a coagulation-flocculation reaction.

Chemical oxidation and chemical precipitation reactions involve chemical reactions between a contaminant and a reagent, which react in a complete manner in order to generate a product. This product, as described, settles and can therefore be separated from the water treated as regards said contaminant.

The coagulation-flocculation reaction involves a process widely used in water treatment to remove colloidal particles, i.e. particles that are too small to sediment, by promoting the agglomeration of these colloidal particles, giving rise to microflocs and the subsequent joining of these microflocs to form larger flocs that are heavy enough to sediment in water.

The process of the present disclosure may comprise
arranging the first mass of at least one soluble contaminant and the volume of demineralised water in a tank,
activating rotating mixing means arranged inside the tank for a predefined first period of time,
arranging the second mass of a reagent that is capable of reacting with the contaminant in the water in the tank,
activating the rotating mixing means arranged inside the tank for a second predefined period of time,
waiting for the product of the reaction between the contaminant and the reagent to sediment in the tank under the action of gravity for a predefined period of time.

The activation of the rotating mixing means during a first predefined period of time and/or the activation of the rotating mixing means during a second predefined period of time may include
rapid stirring rotation of between 100 and 250 rpm,
moderate stirring rotation of between 30 and 99 rpm,
   and/or
slow stirring rotation of between 10 and 29 rpm.

Stirring can therefore be rapid, moderate or slow, so as to
i) in the case of preparing contaminated water, mix the contaminant evenly the demineralised water, and/or
ii) in the case of treating contaminated water, promote the formation and growth of flocs resulting from the type of reaction between the contaminant and a corresponding reagent.

These steps may last between 1 and 60 minutes.

Other compounds that promote flocs growth, such as flocculants, may be added.

When the stirring is turned off, the flocs settle at the bottom of the tank in the form of sludge, which can then be removed and reused for another purpose.

The sedimentation time may be longer than 15 minutes. The predefined period of sedimentation may correspond to the time that, for a contaminant in a first mass and a reagent in a second mass, the reaction between the two is complete and results in the sedimentation of the product.

This disclosure includes the use of a kit in the preparation of a sample of contaminated water for further treatment. The kit comprises a first mass of at least one soluble contaminant, the first mass being between 1 mg and 1 g per litre of demineralised water, and a second mass of a reagent that is capable of reacting with the entire contaminant in the water, the reaction of the reagent with the contaminant being one of oxidation, coagulation-flocculation or chemical precipitation, and the second mass being between 0.3 and 4500 mg per litre of demineralised water.

The kit of the present disclosure allows the preparation of a sample of contaminated water by mixing the contaminant with a sample of demineralised water, and the subsequent treatment of this contaminated water by mixing it with a reagent. This solution allows fast and controllable creation of contaminated water, as well as the control of its treatment, which makes it possible to carry out scientific, research, learning or reuse experiments.

The use of the kit includes preparing a sample of contaminated water by:
mixing a volume of 4 to 50 L of demineralised water with the first mass of a soluble
contaminant in the volume of demineralised water,
   and treating the contaminated water sample through:
mixing a corresponding second mass of a reagent that reacts with the contaminant in demineralised water, reacting completely with the first mass contained in the demineralised water, the reaction of the reagent with the contaminant being one of oxidation, coagulation-flocculation or chemical precipitation.

Each contaminant is arranged in a container adjustable to the first mass and each reagent is arranged in a container adjustable to the second mass, optionally the container adjustable to the first mass being a single-dose volume container suitable for the first mass and the container adjustable to the second mass being a single-dose volume container suitable for the second mass.

For the mixture that is the object of the use according to the present disclosure, demineralised water or contaminated water is passed from each single-dose container, i.e.
the use of the kit includes preparing a sample of contaminated water by
mixing a volume of 4 to 50 L of demineralised water with the first mass of a soluble contaminant in the volume of demineralised water by mixing the whole of the
first mass contained in the container with the demineralised water,
   and treating the contaminated water sample by
mixing a corresponding second mass of a reagent that reacts with the contaminant in demineralised water, the second mass reacting completely with the first mass contained in the container with the contaminated water.

Each oxidation, chemical precipitation, or coagulation-flocculation reaction between a contaminant and a reagent, according to this disclosure, results in treated waters - in the event that each contaminant added to the water has reacted with a reagent in a complete reaction - or pre-treated waters - if any of the contaminants added to the water remain, but another of the added contaminants has already been reacted with a reagent in a complete reaction.

In addition to pre-treated or treated waters, there is also sludge, which is the product resulting from the reaction and after sedimentation.

The pre-treated/treated waters are sent for reuse in accordance with the parameters and standards applicable to the intended purposes. The sludge is thus separated from the pre-treated/treated waters, and may then be reused, separately or in a compound, for multiple purposes in a context of use and experiments without compromising safety on a learning, research and development environment.

Therefore, the present disclosure further comprises a sludge resulting from the sedimentation of the reaction product of the process of this disclosure. When resulting from the controllable reaction, - as defined by the present disclosure - i.e., the reaction of a well-identified contaminant in a known mass with a well-identified reagent in an equally known mass, in a complete reaction, the sludge resulting from the process of the present disclosure presents superior results and higher purity in terms of quality compared to sludge obtained in wastewater treatment processes, presenting additional advantageous applications, such as the aforementioned multiple purposes.

After separation, the sludges may be filtered and dried individually. Some examples of reuse involve the use as chemical reagents in the laboratory and the preparation of water for irrigation, depending on the composition of the sludge.

Sludges formed according to the present disclosure, when mixed in a given proportion, allow the preparation of an aqueous solution that may be used in the water systems of the main irrigation crops, presenting in some circumstances clear benefits for both the agricultural system and the environment. To this end, each sludge must be filtered individually using quick filtering paper, and then oven-dried at 105 °C for at least 4 hours. After drying, each sludge must be stored in an appropriate container.

An example of this is the procedure for preparing 10 L of an aqueous solution suitable for irrigation. Each of the stored sludges must be weighed as follows
- 0.10 g of sludge resulting from contaminated water 1 which contains iron
- 0.16 g of sludge resulting from contaminated water 2 which contains manganese
- 0.20 g of sludge resulting from contaminated water 3 which contains phosphorus and calcium
- 0.14 g of sludge resulting from contaminated water 3 which contains phosphorus and iron
- 0.90 g of sludge resulting from contaminated water 3 which contains phosphorus and aluminium
- 0.08 g of sludge resulting from contaminated water 4 which contains copper
- 0.15 g of sludge resulting from contaminated water 5 which contains zinc
- 0.03 g of sludge resulting from contaminated water 6 which contains a natural dye

Once all the compounds have been added to the water, the pH must be adjusted with an acid, such as hydrochloric acid (HCI), so the water is ready to be used for irrigation.

By reusing the sludge in accordance with the present disclosure, instead of producing compounds for a specific activity only (for example, producing fertilizer based on raw materials, which consumes energy and oxygen and natural resources), it will allow for, in addition to directing the sludge to these additional functions (such as fertilizers), also producing O₂, which is beneficial to the environment, and together with renewable energy sources, the consumption of O₂ is almost zero, thus favouring the reduction of CO₂.

Sludge obtained pursuant to this disclosure can also be reused for research and development, namely studies on water treatment, besides being highly beneficial to a number of measurable and non-measurable industrial activities.

### CHEMICAL OXIDATION

The contaminant may be such that it is removable from the contaminated water by chemical oxidation. In this case, the reagent is such that it reacts with the contaminant by chemical oxidation. In the case of a contaminant removable from water by means of chemical oxidation, this may include an iron compound or a manganese compound.

In the case of a contaminant removable from water by chemical oxidation that may include an iron compound or a manganese compound, the reagent may include hydrogen peroxide (H₂O₂), potassium permanganate (KMnO₄), oxygen (O₂) or a compound of chlorine (CI) or derivatives thereof.

### Sample 1

The contaminant may specifically include an iron compound. The iron compound is present in an amount corresponding to the volume of water, defining a concentration from 10 to 1000 mg/L of the iron compound in the demineralised water, optionally 20 to 80 mg/L.

The iron compound may include or consist of iron (II) sulphate.

The mixture of iron (II) sulphate with demineralised water results in contaminated water. Mixing may be carried out using rapid stirring. A mixture of an iron compound with demineralised water may be referred to as Sample 1.

The water treatment intended to remove the iron compound is carried out by chemical oxidation. Thus, the reagent to be used consists of one or more reagents that react by chemical oxidation with the iron compound in water. One or more oxidizing chemical reagents may be used, individually or simultaneously.

The reagent may include
H₂O₂ between 3 and 600 mg per litre of demineralised water
KMnO₄ between 9 and 1000 mg per litre of demineralised water, or
Chlorine or its derivatives between 6 and 2000 mg per litre of demineralised water.

**Table 1 - Examples of water volumes and masses of contaminant and reagent for the reaction of the contaminant iron (II) sulphate with different reagents.**

| | Demineralised Water Volume | Mass | Reaction |
|---|---|---|---|
| Contaminant FeSO₄ | 6 L | 0.82 g | Oxidation |
| Reagent H₂O₂ | 6 L | 0.093 g | |
| Contaminant FeSO4 | 6 L | 0.82 g | Oxidation |
| Reagent KMnO₄ | 6 L | 0.312 g | |
| Contaminant FeSO₄ | 6 L | 0.82 g | Oxidation |
| Reagent NaClO | 7 L | 0.368 g | |

The treated water resulting from this process may be sent to subsequent treatment stages, such as chemical precipitation, coagulation-flocculation, granular filtration and membrane filtration. The same physical-chemical parameters quantified before treatment can also be measured again and the improvement in water quality may be assessed, just as in large-scale water treatment plants.

The product arising from the reaction between the contaminant and the reagent, after sedimentation, results in a sludge.

The sludge produced through the treatment of the contaminated water 1 may be comprised of Fe(OH)₃. This sludge may be reused for other purposes. To this end, the sludge must be filtered using quick filtering paper, and then oven-dried at 105 °C for at least 4 hours. After drying, the sludge must be stored in an appropriate container for future reuse, since it is a compound that may be used for chemical reactions in laboratories on a learning environment.

Some examples of reuse:
Example 1: study of acid/base reactions. Fe(OH)₃ is a weak base and reacts with acid to form water and a salt. For example, HCI may be added to this solid to promote the dissolution of the precipitate and the formation of FeCl₃ (salt).
Example 2: heating the oven-dried sludge at a temperature of 200 to 400 °C in order to provide Fe₂O₃, a catalyst used in various chemical reactions, such as in the decomposition of hydrogen peroxide (H₂O₂). As a catalyst, Fe₂O₃ will not be consumed by H₂O₂, but will accelerate its decomposition and the formation of oxygen, which may be observed by the formation of bubbles.
Example 3: Fe₂O₃ is commonly used in the manufacture of glass and ceramic materials. In a learning context, it may be used in experiments intended to demonstrate the process for manufacturing ceramics and coloured glass.

### Sample 2

The contaminant may specifically include a manganese compound. The manganese compound is present in an amount corresponding to the volume of water, defining a concentration of from 1 to 1000 mg/L of the manganese compound in the demineralised water, optionally 10 to 50 mg/L.

The manganese compound may include or consist of manganese (II) sulphate.

The mixture of manganese (II) sulphate with demineralised water results in contaminated water. Mixing may be carried out by rapid stirring. A mixture of a manganese compound with demineralised water may be referred to as Sample 2.

The water treatment to remove the manganese compound is carried out by chemical oxidation. Thus, the reagent to be used consists of one or more reagents that react by chemical oxidation with the manganese compound in water. One or more oxidizing chemical reagents may be used, individually or simultaneously.

The reagent may include
H₂O₂ between 0.3 and 600 mg per litre of demineralised water
O₂ between 2 mg and 1000 mg per litre of demineralised water, or
Chlorine or its derivatives between 1 and 4500 mg per litre of demineralised water.

To remove manganese by chemical oxidation, one or more oxidizing chemical reagents may be added, individually or simultaneously, such as H₂O₂ (ranging from 0.3 to 600 mg H₂O₂ /L), O₂ (ranging from 2 mg/L to 1 g/L O₂), chlorine and derivatives thereof (ranging from 1 mg/L to 4.5 g/L Cl₂).

**Table 2 - Examples of water volumes and masses of contaminant and reagent for the reaction of the contaminant manganese (II) sulphate with different reagents.**

| | Demineralised Water Volume | Mass | Reaction |
|---|---|---|---|
| Contaminant MnSO₄ | 6 L | 0.41g | Oxidation |
| Reagent H₂O₂ | 6 L | 0.093 g | |
| Contaminant MnSO₄ | 6 L | 0.41 g | Oxidation |
| Reagent O₂ | 6 L | 0.29g | |
| Contaminant MnSO₄ | 6 L | 0.41 g | Oxidation |
| Reagent NaClO | 6 L | 0.101 g | |

The treated water resulting from this process may be sent to subsequent treatment stages, such as chemical precipitation, coagulation-flocculation, granular filtration and membrane filtration. The same physical-chemical parameters quantified before treatment can also be measured again and the improvement in water quality may be assessed, just as in large-scale water treatment plants.

The product arising from the reaction between the contaminant and the reagent, after sedimentation, results in a sludge.

The sludge produced through the treatment of the contaminated water 2 may be comprised of MnO₂. This sludge may be reused for other purposes. To this end, the sludge must be filtered using quick filtering paper, and then oven-dried at 105 °C for at least 4 hours. After drying, the sludge must be stored in an appropriate container for future reuse, since it is a compound that may be used for chemical reactions in laboratories on a learning, research and development context.

### An example of reuse:

Example: MnO₂ may be used in ceramic and glass production processes as a pigment, in particular to generate shades of brown and black. In a learning context aimed at studying materials, MnO₂ may be added to ceramic clay and heated to high temperatures, above 1000° C, in a suitable casting furnace. Different proportions of MnO₂ result in colour variations.

### CHEMICAL PRECIPITATION

The contaminant may be such that it is removable from the contaminated water by chemical precipitation. In this case, the reagent is such that it reacts with the contaminant by chemical precipitation. In the case of a contaminant removable from water by means of chemical precipitation, this may include an iron compound or a manganese compound.

In the case of a contaminant removable from the water by chemical precipitation that may include a phosphorus compound, a copper compound or a zinc compound, the reagent may include a calcium, aluminium or iron compound, calcium hydroxide (Ca(OH)₂) or sodium hydroxide (NaOH).

### Sample 3

The contaminant may specifically include a phosphorus compound. The phosphorus compound is present in an amount corresponding to the volume of water, defining a concentration of from 10 to 1000 mg/L of the phosphorus compound in the demineralised water, optionally 20 to 80 mg/L.

The phosphorus compound may include or consist of dipotassium hydrogen phosphate.

The mixture of dipotassium hydrogen phosphate with demineralised water results in contaminated water. Mixing may be carried out by rapid stirring. A mixture of a phosphorus compound with demineralised water may be referred to as Sample 3.

The water treatment for removal of the phosphorus compound is carried out by chemical precipitation. Thus, the reagent to be used consists of one or more reagents that react by chemical precipitation with the phosphorus compound in water. One or more chemical reagents, and/or co-adjuvants in the process, may be individually or simultaneously used, that cause chemical precipitation to occur.

The reagent may include
a calcium compound between 20 and 2000 mg per litre of demineralised water
an aluminium compound between 10 and 1300 mg per litre of demineralised water, or
an iron compound between 20 and 2000 mg per litre of demineralised water.

**Table 3 - Examples of water volumes and masses of contaminant and reagent for the reaction of the contaminant potassium dihydrogen phosphate with different reagents.**

| | Demineralised Water Volume | Mass | Reaction |
|---|---|---|---|
| Contaminant K₂HPO₄ | 6 L | 1.69 g | Precipitation |
| Reagent Ca | 6 L | 0.647 g | |
| Contaminant K₂HPO₄ | 6 L | 1.69 g | Precipitation |
| Reagent Al | 6 L | 0.261 g | |
| Contaminant K₂HPO₄ | 6 L | 1.69 g | Precipitation |
| Reagent Fe | 6 L | 0.54 g | |

The treated water resulting from this treatment may be sent to subsequent treatment stages, such as coagulation-flocculation, granular filtration and membrane filtration. The same physical-chemical parameters quantified before treatment can also be measured again and the improvement in water quality may be assessed, just as in large-scale water treatment plants.

The product arising from the reaction between the contaminant and the reagent, after sedimentation, results in a sludge.

The sludge produced through the treatment of contaminated water 3 may be composed of hydroxyapatite (Ca₅OH(PO₄)₃), iron phosphate (FePO₄) or aluminium phosphate (AlPO₄), depending on the precipitating agent used to treat the water. This sludge may be reused for other purposes. To this end, the sludge must be filtered using quick filtering paper, and then oven-dried at 105° C for at least 4 hours. After drying, the sludge must be stored in an appropriate container for future reuse, as it is a compound that may be used for chemical reactions in laboratories on a learning, research and development context.

### An example of reuse:

Example: Hydroxyapatite (Ca₅OH(PO₄)₃) is a material that may be used in adsorption studies, for instance in the removal of heavy metals, such as Pb²⁺ (lead), from water. In this type of study, tests may be performed with different amounts of material and different contact times, so as to determine the difference in lead adsorption efficiency.

Precipitates of aluminium phosphate (AlPO₄) and iron phosphate (FePO₄) may be used to perform solubility experiments and determine Kps (solubility product). To this end, in addition to precipitates, acids and bases are also needed, as well as a spectrophotometer to determine the concentration of metals. The precipitates must be mixed with distilled water and the concentration of dissolved metals must be assessed at different pH levels.

### Sample 4

The contaminant may specifically include a copper compound. The copper compound is present in an amount corresponding to the volume of water, defining a concentration of from 5 to 1000 mg/L of the copper compound in the demineralised water, optionally 100 to 300 mg/L.

The copper compound may include or consist of copper (II) sulphate.

The mixture of copper (II) sulphate with demineralised water results in contaminated water. Mixing may be carried out by rapid stirring. A mixture of a copper compound with demineralised water may be referred to as Sample 4.

The water treatment for removal of the copper compound is carried out by chemical precipitation. Thus, the reagent to be used consists of one or more reagents that react by chemical precipitation with the copper compound in water. One or more chemical reagents, and/or co-adjuvants in the process, may be individually or simultaneously used, that cause chemical precipitation to occur.

The reagent may include an alkaline substance of such mass that, when mixed with the copper compound - such as copper (II) sulphate - in water, raises the total pH to 7-13.

The reagent may include or consist of calcium hydroxide or sodium hydroxide.

**Table 4 - Examples of water volumes and masses of contaminant and reagent for the reaction of the contaminant copper (II) sulphate with different reagents.**

| | Demineralised Water Volume | Mass | Reaction |
|---|---|---|---|
| Contaminant CuSO₄ | 6 L | 3.02 g | Precipitation |
| Reagent Ca(OH)₂ | 6 L | 1.40 g | |
| Contaminant CuSO₄ | 6 L | 3.02 g | Precipitation |
| Reagent NaOH | 6 L | 1.51 g | |

The treated water resulting from this process may be sent to subsequent treatment stages, such as chemical precipitation, coagulation-flocculation, granular filtration and membrane filtration. The same physical-chemical parameters quantified before treatment can also be measured again and the improvement in water quality may be assessed, just as in large-scale water treatment plants.

The product arising from the reaction between the contaminant and the reagent, after sedimentation, results in a sludge.

The sludge produced through the treatment of contaminated water 4 may be composed of Cu(OH)₂. To this end, the sludge must be filtered using quick filtering paper, and then oven-dried at 105° C for at least 4 hours. After drying, the sludge must be stored in an appropriate container for future reuse, as it is a compound that may be used for chemical reactions in laboratories on a learning, research and development context.

### An example of reuse:

Example: Cu(OH)₂ may be used to synthesise and study the formation of complexes. Adding a concentrated solution of ammonia (NH₃) to the Cu(OH)₂ precipitate causes it to dissolve, forming the soluble tetraammine copper(II) complex.

### Sample 5

The contaminant may specifically include a zinc compound. The zinc compound is present in an amount corresponding to the volume of water, defining a concentration of from 5 to 1000 mg/L of the copper compound in the demineralised water, optionally 100 to 300 mg/L.

The copper compound may include or consist of zinc (II) sulphate.

The mixture of zinc (II) sulphate with demineralised water results in contaminated water. Mixing may be carried out by rapid stirring. A mixture of a zinc compound with demineralised water may be referred to as Sample 5.

The water treatment for removal of the zinc compound is carried out by chemical precipitation. Thus, the reagent to be used consists of one or more reagents that react by chemical precipitation with the zinc compound in water. One or more chemical reagents, and/or co-adjuvants in the process, may be individually or simultaneously used, that cause chemical precipitation to occur.

The reagent may include an alkaline substance of such mass that, when mixed with the zinc compound - such as zinc (II) sulphate - in water, raises the total pH to 7-13.

The reagent can include or consist of calcium hydroxide or sodium hydroxide.

**Table 5 - Examples of water volumes and masses of contaminant and reagent for the reaction of the contaminant zinc (II) sulphate with different reagents.**

| | Demineralised Water Volume | Mass | Reaction |
|---|---|---|---|
| Contaminant ZnSO₄ | 6 L | 2.97 g | Precipitation |
| Reagent Ca(OH)₂ | 6 L | 1.36 g | |
| Contaminant ZnSO₄ | 6 L | 2.97 g | Precipitation |
| Reagent NaOH | 6 L | 1.47 g | |

The treated water resulting from this process may be sent to subsequent treatment stages, such as coagulation-flocculation, granular filtration and membrane filtration. The same physical-chemical parameters quantified before treatment can also be measured again and the improvement in water quality may be assessed, just as in large-scale water treatment plants.

The product arising from the reaction between the contaminant and the reagent, after sedimentation, results in a sludge.

The sludge produced through the treatment of contaminated water 5 may be composed of Zn(OH)₂. The sludge must be filtered using quick filtering paper, and then oven-dried at 105 °C for at least 4 hours. After drying, the sludge must be stored in an appropriate container for future reuse, since it is a compound that may be used for chemical reactions in laboratories on a learning, research and development context.

### An example of reuse:

Example: Zn(OH)₂ may be used to synthesise and study the formation of complexes. Adding a concentrated solution of ammonia (NH₃) to the Zn(OH)₂ precipitate causes it to dissolve, forming the soluble tetraammine zinc(II) complex. These precipitates can also be redissolved in an acidic medium and reused to perform the same experiments that gave origin to the initial sludge.

### COAGULATION-FLOCCULATION

The contaminant may be such that it may be removed from the contaminated water by coagulation-flocculation. In this case, the reagent is such that it reacts with the contaminant by coagulation-flocculation. In the case of a contaminant that may be removed from water by coagulation-flocculation, it may include a natural dye.

### Sample 6

The contaminant may specifically include a natural dye. The natural dye is present in a quantity corresponding to the volume of water, defining a concentration of from 10 to 1000 mg/L of the compound in the demineralised water, optionally 100 to 300 mg/L.

Mixing natural dye with demineralised water results in contaminated water. Mixing may be carried out by rapid stirring. A mixture of a natural dye and demineralised water may be referred to as Sample 6.

The water treatment for removal of the natural dye is carried out by coagulation-flocculation. Thus, the reagent to be used consists of one or more reagents which, by coagulation-flocculation, can remove the natural dye in the water. One or more chemical reagents that cause coagulation-flocculation may be used, i.e. coagulants or flocculants, individually or simultaneously, and/or flocculation aids.

The reagent may include
a calcium compound between 0.003 and 0.3 mg per litre of demineralised water
an aluminium compound between 0.4 and 50 mg per litre of demineralised water, or
an iron compound between 2 and 200 mg per litre of demineralised water.

Chemical reagents that act as flocculants, such as natural or synthetic polyelectrolytes, and/or flocculation aids, such as clays, may be added to the mixture of reagent and contaminant in water.

**Table 6 - Examples of water volumes and masses of contaminant and reagent for the reaction of the natural dye contaminant with different reagents**

| | Demineralised Water Volume | Mass | Reaction |
|---|---|---|---|
| Contaminant dye | 6L | 0.30 g | Coagulation-Flocculation |
| Reagent Ca | 6L | 0.01 g | |
| Contaminant dye | 6 L | 0.30 g | Coagulation-Flocculation |
| Reagent Al | 6 L | 0.028 g | |
| Contaminant dye | 6 L | 0.30 g | Coagulation-Flocculation |
| Reagent Fe | 6 L | 0.0825 g | |

The treated water resulting from this process may be sent to subsequent treatment stages, such as chemical oxidation, chemical precipitation, granular filtration and membrane filtration. The same physical-chemical parameters quantified before treatment can also be measured again and the improvement in water quality may be assessed, just as in large-scale water treatment plants.

The product arising from the reaction between the contaminant and the reagent, after sedimentation, results in a sludge.

The sludge produced through the treatment of contaminated water 6 may be composed of the natural dye. The sludge must be filtered using quick filtering paper, and then oven-dried at 105º C for at least 4 hours. After drying, the sludge must be stored in an appropriate container for future reuse, since it is a compound that may be used for chemical reactions in laboratories on a learning, research and development context.

As this sludge is a natural compound and not fully known in terms of formulae and exact chemical composition, it supports research, experiments and developments that differ from the other samples presented in this disclosure, offering scattered data, not all of which may be presented due to the nature of the process itself.

As will be evident to a person skilled in the art, the present disclosure should not be limited to the specific details herein described, with a number of changes being possible, which remain within the scope of the present disclosure and of its appended claims.

The details specific to the present disclosure can, of course, be combined in the various ways possible, the repetition of all such combinations being herein avoided.

## Claims

1. A process for preparing a contaminated water sample and subsequently treating said contaminated water, the process comprising
filling a tank with a volume of 4 to 50 L of demineralised water,
mixing a first mass of at least one soluble contaminant into the volume of demineralised water, the first mass ranging from 1 mg to 1 g per litre of demineralised water, thus obtaining contaminated water,
mixing a second mass of a reagent that is capable of reacting with the contaminant in water, the reaction of the reagent with the contaminant being one of oxidation, coagulation-flocculation or precipitation, and the second mass being such that i) the reagent reacts with the entire contaminant by oxidation, coagulation-flocculation or chemical precipitation, resulting in a product whose deposition occurs by gravity, and ii) ranges from 0.003 mg to 4.5 g per litre of demineralised water.

2. A process for preparing a contaminated water sample and subsequently treating said contaminated water according to claim 1, the process further comprising
arranging the first mass of at least one soluble contaminant and the volume of demineralised water in a tank,
activating rotating mixing means arranged inside the tank for a predefined first period of time,
arranging the second mass of a reagent that is capable of reacting with the contaminant in the water in the tank,
activating the rotating mixing means arranged inside the tank for a second predefined period of time,
waiting for the product of the reaction between the contaminant and the reagent to sediment in the tank, under the action of gravity, for a predefined period of time.

3. A process for preparing a contaminated water sample and subsequently treating said contaminated water according to the previous claim, wherein the predefined sedimentation period may correspond to the time in which, for a contaminant in a first mass and a reagent in a second mass, the reaction between the two is complete and results in the sedimentation of the product.

4. A process for preparing a contaminated water sample and subsequently treating said contaminated water according to any one of claims 2-3, wherein the activation of the rotating mixing means during a first predefined period of time and/or the activation of the rotating mixing means during a second predefined period of time include
rapid stirring rotation of between 100 and 250 rpm,
moderate stirring rotation of between 30 and 99 rpm,
and/or
slow stirring rotation of between 10 and 29 rpm.

5. A process for preparing a contaminated water sample and subsequently treating said contaminated water according to any of the preceding claims, wherein the contaminant consists of a metal, non-metal, silicate and/or organic matter.

6. A Process for preparing a contaminated water sample and subsequently treating said contaminated water according to the previous claim, wherein the reagent is such that it reacts with the metal, non-metal, silicate and/or organic matter contaminant by oxidation, chemical precipitation or coagulation-flocculation.

7. A process for preparing a contaminated water sample and subsequently treating said contaminated water according to the previous claim in which
the contaminant consists of an iron compound or a manganese compound, the corresponding reagent reacting with the contaminant by oxidation,
the contaminant consists of a phosphorus compound, a copper compound, a zinc compound, the corresponding reagent reacting with the contaminant by chemical precipitation, or
the contaminant consists of a natural dye, the corresponding reagent reacting with the contaminant by coagulation-flocculation.

8. A process for preparing a contaminated water sample and subsequently treating said contaminated water according to the previous claim, wherein
- the contaminant is an iron compound, optionally iron (II) sulphate, and the first mass is between 10 and 1000 mg per litre of demineralised water, and the corresponding reagent consists of
H₂O₂ between 3 and 600 mg per litre of demineralised water
KMnO₄ between 9 and 1000 mg per litre of demineralised water, or
Chlorine or its derivatives between 6 and 2000 mg per litre of demineralised water,
- the contaminant is a manganese compound, optionally manganese (II) sulphate, and the first mass is between 1 and 1000 mg per litre of demineralised water, and the corresponding reagent consists of
H₂O₂ between 0.3 and 600 mg per litre of demineralised water
O₂ between 2 and 1000 mg per litre of demineralised water, or
Chlorine or its derivatives between 1 and 4500 mg per litre of demineralised water,
- the contaminant is a phosphorus compound, optionally potassium dihydrogen phosphate, and the first mass is between 10 and 1000 mg per litre of demineralised water, and the corresponding reagent consists of
a calcium compound between 20 and 2000 mg per litre of demineralised water
an aluminium compound between 10 and 1300 mg per litre of demineralised water, or
an iron compound between 20 and 2000 mg per litre of demineralised water,
- the contaminant is a copper compound, optionally copper (II) sulphate, and the first mass is between 5 and 1000 mg per litre of demineralised water, and the corresponding reagent consists of
an alkaline substance with a mass such that, when mixed with the copper compound in the water, raises the total pH to between 7 and 13, where the alkaline substance optionally consists of sodium hydroxide or calcium hydroxide,
- the contaminant is a zinc compound, optionally zinc (II) sulphate, and the first mass is between 10 and 1000 mg per litre of demineralised water, and the corresponding reagent consists of
an alkaline substance with a mass such that, when mixed with the zinc compound in the water, raises the total pH to between 7 and 13, where the alkaline substance optionally consists of sodium hydroxide or calcium hydroxide,
or
- the contaminant is a natural dye, and the first mass is between 10 and 1000 mg per litre of demineralised water, and the corresponding reagent consists of
a calcium compound between 0.003 and 0.3 mg per litre of demineralised water
an aluminium compound between 0.4 and 50 mg per litre of demineralised water, or
an iron compound between 2 and 200 mg per litre of demineralised water.

9. A sludge resulting from the sedimentation of the reaction product of the process according to any of the preceding claims.

10. Use of a kit in the preparation of a contaminated water sample for subsequent treatment, the kit comprising
a first mass of at least one soluble contaminant, the first mass being between 1 mg and 1 g per litre of demineralised water,
and
a second mass of a reagent capable of reacting with the entire contaminant in the water, the reaction of the reagent with the contaminant being one of oxidation, coagulation-flocculation or chemical precipitation, and the second mass being between 0.3 and 4500 mg per litre of demineralised water,
wherein the use of the kit includes preparing a sample of contaminated water by
mixing a volume of 4 to 50 L of demineralised water with the first mass of a soluble contaminant in the volume of demineralised water,
and treating the contaminated water sample by
mixing a corresponding second mass of a reagent that reacts with the contaminant in demineralised water, the reaction of the reagent with the contaminant being one of oxidation, coagulation-flocculation or chemical precipitation.

11. Use according to the previous claim, wherein each contaminant is arranged in a container adjustable to the first mass and each reagent is arranged in a container adjustable to the second mass, optionally the container adjustable to the first mass being a single-dose volume container suitable for the first mass and the container adjustable to the second mass being a single-dose volume container suitable for the second mass, and
where the use of the kit includes the preparation of a contaminated water sample by
mixing a volume of 4 to 50 L of demineralised water with the first mass of a soluble contaminant in the volume of demineralised water, mixing the entire first mass contained in the container with the demineralised water,
and the treatment of the contaminated water sample by
mixing a corresponding second mass of a reagent that reacts with the contaminant in demineralised water, reacting in its entirety with the first mass contained in the container with the contaminated water

12. Use according to any one of claims 10-11, wherein the contaminant consists of a metal, non-metal, silicate and/or organic matter optionally the reagent being such that it reacts with the metal, non-metal, silicate and/or organic matter contaminant by oxidation, chemical precipitation or coagulation-flocculation and optionally
the contaminant consists of an iron compound or a manganese compound, the corresponding reagent reacting with the contaminant by oxidation,
the contaminant consists of a phosphorus compound, a copper compound, a zinc compound, the corresponding reagent reacting with the contaminant by chemical precipitation, or
the contaminant consists of a natural dye, the corresponding reagent reacting with the contaminant by coagulation-flocculation.

13. Use according to the previous claim, in which
the contaminant is an iron compound, optionally iron (II) sulphate, and the first mass is between 10 and 1000 mg per litre of demineralised water, and the corresponding reagent consists of
H₂O₂ between 3 and 600 mg per litre of demineralised water
KMnO₄ between 9 and 1000 mg per litre of demineralised water, or
Chlorine or its derivatives between 6 and 2000 mg per litre of demineralised water,
the contaminant is a manganese compound, optionally manganese (II) sulphate, and the first mass is between 1 and 1000 mg per litre of demineralised water, and the corresponding reagent consists of
H₂O₂ between 0.3 and 600 mg per litre of demineralised water
O₂ between 2 mg and 1000 mg per litre of demineralised water, or
Chlorine or its derivatives between 1 and 4500 mg per litre of demineralised water,
the contaminant is a phosphorus compound, optionally potassium dihydrogen phosphate, and the first mass is between 10 and 1000 mg per litre of demineralised water, and the corresponding reagent consists of
a calcium compound between 20 and 2000 mg per litre of demineralised water
an aluminium compound between 10 and 1300 mg per litre of demineralised water, or
an iron compound between 20 and 2000 mg per litre of demineralised water,
the contaminant is a copper compound, optionally copper (II) sulphate, and the first mass is between 5 and 1000 mg per litre of demineralised water, and the corresponding reagent consists of
an alkaline substance with a mass such that, when mixed with the copper compound in the water, raises the total pH to between 7 and 13, where the alkaline substance optionally consists of sodium hydroxide or calcium hydroxide,
the contaminant is a zinc compound, optionally zinc (II) sulphate, and the first mass is between 10 and 1000 mg per litre of demineralised water, and the corresponding reagent consists of
an alkaline substance with a mass such that, when mixed with the zinc compound in the water, raises the total pH to between 7 and 13, where the alkaline substance optionally consists of sodium hydroxide or calcium hydroxide,
the contaminant is a natural dye, and the first mass is between 10 and 1000 mg per litre of demineralised water, and the corresponding reagent consists of
a calcium compound between 0.003 and 0.3 mg per litre of demineralised water
an aluminium compound between 0.4 and 50 mg per litre of demineralised water, or
an iron compound between 2 and 200 mg per litre of demineralised water.

14. Kit for the preparation of a contaminated water sample intended for subsequent treatment, the kit comprising
a volume of 4 to 50 L of demineralised water,
a first mass of at least one soluble contaminant, the first mass being between 1 mg and 1 g per litre of demineralised water,
and a second mass of a reagent that is capable of reacting with the entire contaminant in the water, the reaction of the reagent with the contaminant being one of oxidation, coagulation-flocculation or chemical precipitation, and the second mass being between 0.3 and 4500 mg per litre of demineralised water.

15. Kit according to the previous claim, wherein each contaminant is arranged in a container adjustable to the first mass and each reagent is arranged in a container adjustable to the second mass, optionally the container adjustable to the first mass being a single-dose volume container suitable for the first mass and the container adjustable to the second mass being a single-dose volume container suitable for the second mass.
